Europäisches Patentamt

European Patent Office

Office européen des brevets

(19)

(11) Veröffentlichungsnummer: **0 246 405**
**B1**

(12) # EUROPÄISCHE PATENTSCHRIFT

(45) Veröffentlichungstag der Patentschrift:
**09.05.90**

(51) Int. Cl.⁵: **F16K 11/00**, F16K 11/20

(21) Anmeldenummer: **87103400.5**

(22) Anmeldetag: **10.03.87**

(54) **Sanitärarmatur.**

(30) Priorität: **22.03.86 DE 3609771**

(43) Veröffentlichungstag der Anmeldung:
**25.11.87 Patentblatt 87/48**

(45) Bekanntmachung des Hinweises auf die Patenterteilung:
**09.05.90 Patentblatt 90/19**

(84) Benannte Vertragsstaaten:
**DE ES FR GB NL SE**

(56) Entgegenhaltungen:
CH-A- 648 390
DE-A- 2 014 552
DE-A- 3 244 121
DE-B- 2 653 754
FR-A- 2 483 036
US-A- 3 929 283

(73) Patentinhaber: **FRIEDRICH GROHE ARMATURENFABRIK GmbH & CO**, Hauptstrasse 137,
**D-5870 Hemer 1(DE)**

(72) Erfinder: **Humpert, Jürgen**, Oberlinweg 18,
**D-5870 Hemer(DE)**
Erfinder: **Gransow, Eckhard**, Lupinenstrasse 21,
**D-5860 Iserlohn 5(DE)**
Erfinder: **Kostorz, Jan Ryszard**, Salzweg 37g,
**D-5750 Menden 2(DE)**

## Beschreibung

Die Erfindung betrifft eine Sanitärarmatur mit den im Oberbegriff des Anspruchs 1 angegebenen Merkmalen.

Aus der DE-A 3 244 121 ist z.B. eine derartige Sanitärarmatur bekannt. In dieser Sanitärarmatur ist ein als eine Baueinheit ausgebildetes Misch- und Mengenregulierventil eingesetzt, wobei mit einem Stellglied in einem ersten Freiheitsgrad die Wasserdurchflußmenge und in einem zweiten Freiheitsgrad das Mischungsverhältnis des zuströmenden Kalt- und Warmwassers bzw. die Temperatur des austretenden Mischwassers eingestellt werden kann.

Außerdem ist es bei Sanitärarmaturen bekannt (DE-A 3 016 256), besondere Umschaltventile vorzusehen, mit denen Mischwasser wahlweise zu unterschiedlichen Verbrauchern, z.B. einer Brauseeinrichtung und einer Badewanne, geleitet werden kann.

Der Erfindung liegt die Aufgabe zugrunde, eine Sanitärarmatur zu schaffen, mit der eine unabhängige, feinfühlige Einstellung der Gesamtdurchflußmenge bzw. Wasserzapfmenge und ein wahlweises Zu- oder Umschalten von Zu- oder Ablauföffnungen ermöglicht ist, wobei eine mit einfachen Mitteln durchzuführende Installation und Montage angestrebt ist.

Diese Aufgabe wird erfindungsgemäß durch die im kennzeichnenden Teil des Anspruchs 1 angegebenen Merkmale gelöst.

Weitere Ausgestaltungen der Erfindung sind in den Ansprüchen 2 bis 6 angegeben.

Die mit der Erfindung erzielbaren Vorteile bestehen insbesondere darin, daß mit einem Betätigungsgriff sowohl eine feinfühlige Einstellung der austretenden Wassermenge pro Zeiteinheit als auch eine Umschaltung, z.B. vom Wannenauslauf auf den Brauseauslauf etc., oder eine plötzliche Umschaltung von temperiertem Mischwasser auf Kaltwasser (kneippsche Wasseranwendungen) ermöglicht ist. Durch die werksseitige Anordnung des Mengenregulierventils zusammen mit dem vorgeschalteten Mischventil in einem Installationsgehäuse kann die Installation auf der Baustelle wesentlich vereinfacht werden. Zweckmäßig ist hierbei das Mischventil mit der Temperaturwähleinrichtung sowie das Mengenregulierventil mit der Betätigungseinrichtung jeweils als separate Baueinheit ausgebildet, die unabhängig an entsprechenden Aufnahmestellen des Installationsgehäuses eingesetzt und gehalten werden können.

Außerdem bietet die Erfindung die Möglichkeit, die feinfühlige Mengenregulierung zu verbinden mit einem wahlweisen Umschalten auf beispielsweise zwei unterschiedlich große maximale Durchflußmengen pro Zeiteinheit (Normalstellung – Sparstellung) oder es kann dem zufließenden Mischwasser noch Kaltwasser zugemischt werden.

Das erfindungsgemäße Mengenregulierventil bietet somit einen erhöhten Bedienungskomfort für den Benutzer bei einer hohen Funktionssicherheit und einer langen Lebensdauer, wobei eine relativ einfache Installation auf der Baustelle, im Bad etc. ermöglicht ist.

Ein Ausführungsbeispiel der Erfindung ist in der Zeichnung dargestellt und wird im folgenden näher beschrieben.

Es zeigt

Fig. 1 eine Sanitärarmatur mit einem Installationsgehäuse, in dem ein thermostatgeregeltes Mischventil einem Mengenregulierventil vorgeschaltet ist, in Seitenansicht, teilweise geschnitten;

Fig. 2 die Ventilscheiben des Mengenregulierventils gemäß Fig. 1 in Draufsicht mit separater Abflußöffnung für eine Brause und einer Badewanne;

Fig. 3 die Ventilscheiben des Mengenregulierventils gemäß Figur 1 in Draufsicht mit separater Mischwasserzulauföffnung und Kaltwasserzulauföffnung;

Fig. 4 die Ventilscheiben des Mengenregulierventils gemäß Figur 1 in Draufsicht mit separater Normalauslaßöffnung und Sparauslaßöffnung.

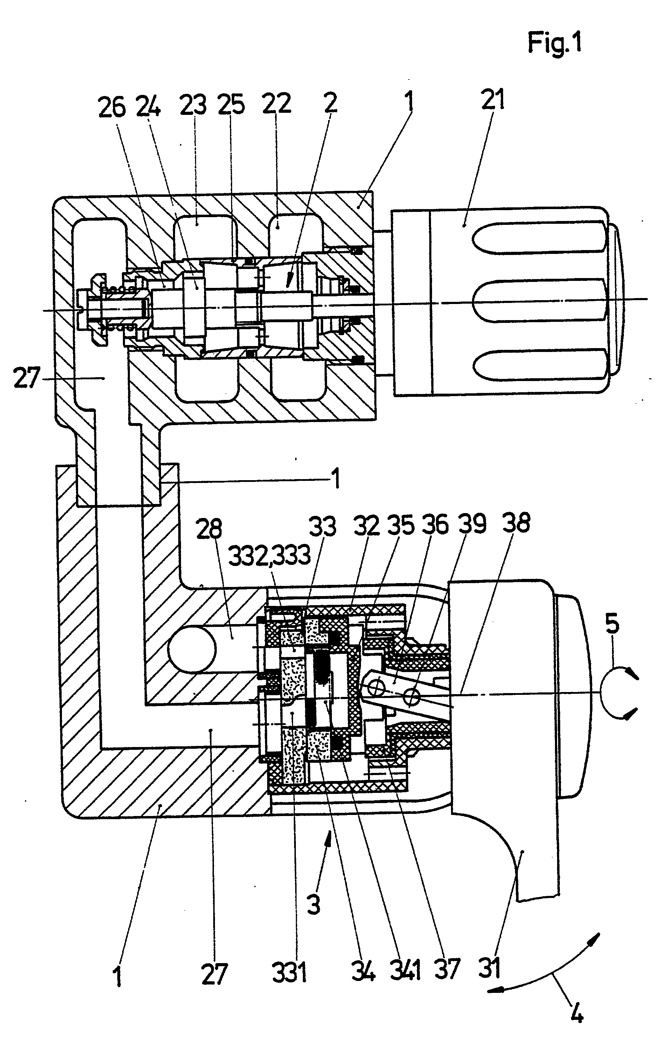

Bei der in Fig. 1 gezeigten Sanitärarmatur ist ein in schematischer Weise dargestelltes Installationsgehäuse 1 vorgesehen, in dem als eine separate Baueinheit ein thermostatgeregeltes Mischventil 2 mit einer Temperaturwähleinrichtung 21 und ein Mengenregulierventil 3 mit einem Betätigungsgriff 31 angeordnet sind. Stromaufwärts im Bereich des thermostatgeregelten Mischventils 2 sind an dem Installationsgehäuse 1 Anschlüsse für die Kaltwasser- und die Warmwasserversorgungsleitung (in der Zeichnung nicht dargestellt) vorgesehen, die mit Ringkammern 22, 23 für das kalte und warme Wasser verbunden sind. Von dem an sich bekannten thermostatgeregelten Mischventil 2 wird das zufließende Kalt- und Warmwasser von einem Doppelsitzventilschieber 25, der über ein Dehnstoffelement 24 mit der Temperaturwähleinrichtung 21 verbunden ist, zu temperiertem Wasser in einer Mischkammer 26 gemischt und von hier aus in einen Mischwasserkanal 27 des Installationsgehäuses 1 abgegeben, von wo aus das temperierte Mischwwasser dem Mengenregulierventil 3 hinzugeführt wird.

Das Mengenregulierventil 3 ist gekapselt in einem Kartuschengehäuse 32 angeordnet und mit den im Installationsgehäuse 1 ausgebildeten Zu- und Abflußkanälen gedichtet verbunden. In dem Kartuschengehäuse 32 ist eine Festscheibe 33 mit einer Einlaßöffnung 331 und zwei ringsegmentförmig ausgebildeten Auslaßöffnungen 332, 333 für einen Badewannenwasserzulauf und einem Wasserzulauf für eine Brause vorgesehen. An der ortsfest im Kartuschengehäuse 32 gehalterten Festscheibe 33 ist eine Regelscheibe 34 mit einem Überströmkanal 341 für das zufließende Mischwasser angelagert. Beide Scheiben, Festscheibe 33 und Regelscheibe 34, sind aus einem verschleißfesten Keramikmaterial hergestellt und liegen mit ihren, durch entsprechende Feinstbearbeitung geglätteten Stirnflächen wasserdicht aneinander. Der Überströmkanal 341 ist in der Regelscheibe 34 als glatter Durchbruch ausgebildet und wird an der äußeren Stirnfläche von einer Verschlußkappe 35 verschlossen, welche gleichzeitig formschlüssig mit der Regelscheibe 34 verbunden ist. An der gegenüberliegenden Stirnseite liegt die Verschlußkappe 35 zur Abstützung an einer drehbar aber axial festliegenden Buchse 37 an. In der Buchse 37 ist auf einer Drehachse 38 ein doppelarmiger Stellhebel 36 angeordnet, der einerseits zusammen mit der Buchse 37 um die Drehachse 38 verdreht werden kann und andererseits um eine senkrecht zur Drehachse 38 liegende Schwenkachse 39 ausgelenkt werden kann. Der Stellhebel 36 ist dabei einerseits mit der Verschlußkappe 35 und andererseits mit dem Betätigungsgriff 31 verbunden. Wird nun der Betätigungsgriff 31 in Richtung eines Pfeils 4 um die Schwenkachse 39 verschwenkt, so erfährt die Regelscheibe 34 eine radiale Auslenkung zur Festscheibe 33, wodurch in Abhängigkeit von der Schwenkstellung die Einlaßöffnung 331 mit wenigstens einer Auslaßöffnung 332, 333 verbindbar ist. Mit dieser Stellbewegung läßt sich also die Gesamtdurchflußmenge bzw. die Zapfwassermenge pro Zeiteinheit feinfühlig bestimmen.

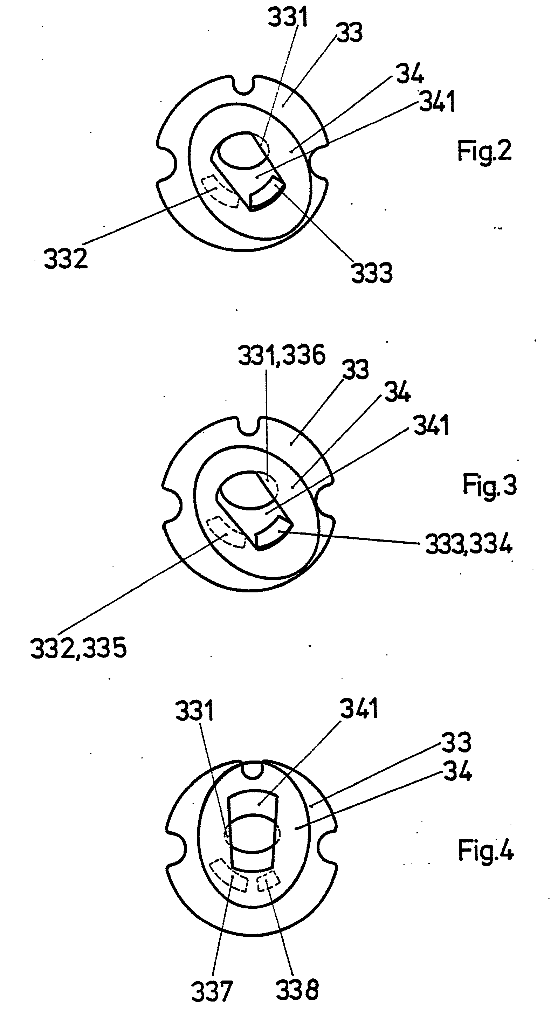

Wird dagegen der Betätigungsgriff 31 in Richtung eines Pfeiles 5 um die Drehachse 38 verdreht, so erfährt die Regelscheibe 34, wie insbesondere der Zeichnung Fig. 2 (schematische Draufsicht der aufeinanderliegenden Festscheibe 33 und Regelscheibe 34) zu entnehmen ist, eine Verdrehung zur Festscheibe 33. Hierdurch kann wahlweise die Öffnung 332 für den Wasserzulauf zu einer Badewanne oder die Öffnung 333 für den Wasserzulauf zu einer Brause über den Überströmkanal 341 mit der Öffnung 331, durch die das temperierte Mischwasser eintritt, in Verbindung gebracht werden.

Mit dem in Fig. 1 und Fig. 2 dargestellten Mengenregulierventil 3 kann daher mit einem Betätigungsgriff 31 mit einem ersten Freiheitsgrad durch Verschwenken in Richtung der Pfeile 4 die Durchflußmenge pro Zeiteinheit feinfühlig eingestellt werden, während mit einem zweiten Freiheitsgrad durch ein Verdrehen in Richtung der Pfeile 5 der Auslaß zu verschiedenen Verbrauchern geschaltet werden kann.

In der Fig. 3 ist ein anderes Ausführungsbeispiel dargestellt, wobei die beiden Ventilscheiben, Festscheibe 33 und Regelscheibe 34, aufeinanderliegend in schematischer Darstellung in Draufsicht gezeigt sind. Die Abmessungen der beiden Scheiben entsprechen dabei den Abmessungen des Ausführungsbeispiels gemäß Fig. 2.

Im Gegensatz zu dem vorbeschriebenen Ausführungsbeispiel ist jedoch ein Mischwasserzulauf 334 an der ringsegmentartigen Öffnung 333 angeschlossen und an der Öffnung 332 ist ein weiterer Kaltwasserzulauf 335 angeschlossen, wobei die Öffnung 331 als Ablauf 336 geschaltet ist und z.B. mit einer Kneippbrause in Verbindung steht.

Durch diese Anordnung kann die Mengenregulierung in gleicher Weise durch ein Verschwenken des Betätigungsgriffs 31 erfolgen, während bei einem Verdrehen in Richtung eines Pfeils 5 wahlweise der Mischwasserauslaß oder der Kaltwasserauslaß mit der Kneippbrause verbindbar ist.

In Fig. 4 ist schließlich eine weitere Ausführungsart des Mengenregulierventils 3 in schematischer Weise dargestellt. Die Heranführung des Mischwassers erfolgt hierbei in gleicher Weise wie beim Ausführungsbeispiel nach Fig. 2 durch eine Öffnung 331. Für den Mischwasserauslaß sind zwei unterschiedlich große ringsegmentartige Öffnungen 337 und 338 ausgebildet. Die Öffnung 337 weist dabei einen Querschnitt auf, wie er für die Nenndurchflußleistung des Mengenregulierventils erforderlich ist, während die Öffnung 338 im Querschnitt wesentlich verringert ist, wodurch wahlweise von Normal- auf Sparbetrieb und umgekehrt mittels einer Drehbewegung in Richtung eines Pfeils 5 geschaltet werden kann.

Bei dem Ausführungsbeispiel gemäß Fig. 1 und 2 sowie den in den Fig. 3 und 4 gezeigten Abwandlungen ist das erfindungsgemäße Mengenregulierventil 3 mit dem thermostatgeregelten Mischventil 2 in einem Installationsgehäuse 1 angeordnet, wobei das erzeugte Mischwasser in einem Kanal 27 und gegebenenfalls ein weiterer Kanal für die Zuführung von separatem Kaltwasser dem Mengenregulierventil 3 unmittelbar zugeführt sind und in dem Ablaufkanäle 28 mit entsprechenden Anschlußstellen zur Zuleitung zu den Verbrauchern ausgebildet sind.

**Patentansprüche**

1. Sanitärarmatur mit einem Misch- und Mengenregulierventil, wobei eine ortsfest gehaltene Festscheibe (33) mit wenigstens drei Öffnungen und eine in zwei Freiheitsgraden verschiebbare, an der Festscheibe (33) angelagerte Regelscheibe (34) mit einem Überströmkanal (341), mit dem eine oder mehrere kreisringförmig angeordnete Öffnungen mit einer etwa im Zentrum des Kreisrings angeordneten Öffnung (331) der Festscheibe (33) verbindbar sind, vorgesehen ist, dadurch gekennzeichnet, daß die Sanitärarmatur ein Installationsgehäuse (1) aufweist, an dem stromaufwärts ein Mischventil (2) und stromabwärts ein Mengenregulierventil (3) vorgesehen ist, wobei im Mengenregulierventil (3) die Festscheibe (33) über eine Öffnung (331, 334) mit einem Mischwasserabfluß des Mischventils im Installationsgehäuse (1) und wenigstens eine weitere Öffnung (332, 333, 337, 338) mit einem Wasserverbraucher verbunden ist.

2. Sanitärarmatur nach Anspruch 1, dadurch gekennzeichnet, daß eine ringförmige Öffnung (332) mit einem Badewannenauslauf und eine zweite ringförmige Öffnung (333) mit einer Brause verbunden ist und der Mischwasserzufluß durch die zentrale Öffnung (331) in der Festscheibe (33) erfolgt.

3. Sanitärarmatur nach Anspruch 1, dadurch gekennzeichnet, daß die eine ringförmige Öffnung (333) mit dem Mischwasserzufluß und die zweite ringförmige Öffnung (332) mit einem Kaltwasserzulauf (335) verbunden ist und der Ablauf (336) über die zentrale Öffnung (331) erfolgt.

4. Sanitärarmatur nach Anspruch 1 oder 2, dadurch gekennzeichnet, daß die eine ringförmige Öffnung (338) im Querschnitt nur ca. halb so groß ist wie die zweite ringförmige Öffnung (337).

5. Sanitärarmatur nach wenigstens einem der Ansprüche 1 bis 4, dadurch gekennzeichnet, daß das Mengenregulierventil (3) einem thermostatgeregelten Mischventil (2) nachgeschaltet ist.

6. Sanitärarmatur nach wenigstens einem der Ansprüche 1 bis 5, dadurch gekennzeichnet, daß die Wassermischeinrichtung und das Mengenregulierventil (3) als separate Baueinheiten ausgebildet sind, die in einem einstückigen oder mehrstückigen Gehäuse einsetzbar sind.

## Claims

1. Sanitary fitting having a mixing and quantity-regulating valve, there being provided a solid disc (33) which is mounted in such a manner that it is fixed in place and which has at least three openings and a control disc (34) which is displaceable in two degrees of freedom and is mounted on the solid disc (33) and has an overflow channel (341) by means of which one or more openings arranged in a circle can be connected to an opening (331), arranged approximately in the centre of the circle, in the solid disc (33), characterised in that the sanitary fitting has an installation housing (1) on which, upstream, a mixing valve (2) and, downstream, a quantity-regulating valve (3) are provided, wherein in the quantity-regulating valve (3) the solid disc (33) is connected by way of an opening (331, 334) to a mixed-water discharge for the mixing valve in the installation housing (1) and at least one further opening (332, 333, 337, 338) is connected to a water consumer.

2. Sanitary fitting according to claim 1, characterised in that an annular opening (332) is connected to a bath outlet and a second annular opening (333) is connected to a shower and the mixed-water supply is effected through the central opening (331) in the solid disc (33).

3. Sanitary fitting according to claim 1, characterised in that one annular opening (333) is connected to the mixed-water supply and the second annular opening (332) is connected to a cold-water supply (335) and the outflow (336) is effected by way of the central opening (331).

4. Sanitary fitting according to claim 1 or 2, characterised in that one annular opening (338) is only half as large in cross-section as the second annular opening (337).

5. Sanitary fitting according to at least one of claims 1 to 4, characterised in that the quantity-regulating valve (3) is connected downstream of a thermostatcontrolled mixing valve (2).

6. Sanitary fitting according to at least one of claims 1 to 5, characterised in that the water-mixing device and the quantity-regulating valve (3) are in the form of separate units that can be inserted into a housing comprising one or more components.

## Revendications

1. Robinet d'usage sanitaire comportant un robinet-mélangeur et de régulation de débit, un disque solide (33) maintenu fixe ayant au moins trois ouvertures et pouvant coulisser suivant deux degrés de liberté contre un disque de réglage (34), appliqué contre le disque fixe (33), avec un canal de passage (341) avec lequel peuvent communiquer une ou plusieurs ouvertures circulaires et une ouverture (331) du disque fixe (333), cette dernière étant prévue sensiblement au milieu de l'anneau de cercle, robinet caractérisé en ce qu'il comporte un boîtier de montage (1) muni en amont d'un robinet-mélangeur (2) et en aval d'un robinet de régulation de débit (3), le disque fixe (33) du robinet-régulateur de débit (3) étant relié par une ouverture (331, 334) à une sortie d'eau mélangée du robinet-mélangeur dans le boîtier de montage (1) et au moins une autre ouverture (332, 333, 337, 338) étant reliée à un utilisateur d'eau.

2. Robinet à usage sanitaire selon la revendication 1, caractérisé en ce qu'une ouverture annulaire (332) est reliée à une sortie de remplissage de baignoire et une seconde ouverture annulaire (333) est reliée à une douche, l'arrivée d'eau mélangée se faisant par l'ouverture centrale (331) du disque fixe (33).

3. Robinet à usage sanitaire selon la revendication 1, caractérisé en ce que l'une des ouvertures annulaires (333) est reliée à l'alimentation en eau mélangée et la seconde ouverture annulaire (332) est reliée à une alimentation d'eau froide (335), la sortie (336) se faisant par l'ouverture centrale (331).

4. Robinet à usage sanitaire selon la revendication 1 ou 2, caractérisé en ce que l'une des ouvertures annulaires (338) a une section qui correspond sensiblement à la moitié de celle de la seconde ouverture annulaire (337).

5. Robinet à usage sanitaire selon au moins l'une des revendications 1 à 4, caractérisé en ce que le robinet de réglage de débit est en aval d'un robinet-mélangeur (2) à régulation thermostatique.

6. Robinet à usage sanitaire selon au moins l'une des revendications 1 à 5, caractérisé en ce que le dispositif-mélangeur d'eau et la vanne de régulation de débit sont des ensembles constructifs distincts qui se placent dans un boîtier en une ou plusieurs pièces.

Fig.1

331
33
34
341

Fig.2

332

333

331,336
33
34
341

Fig.3

333,334

332,335

331
341
33
34

Fig.4

337
338